# EUROPÄISCHE PATENTSCHRIFT

(11) **EP 2 221 498 B1**
(45) Veröffentlichungstag und Bekanntmachung des Hinweises auf die Patenterteilung: **03.04.2013**
(21) Anmeldenummer: 10153661.3
(22) Anmeldetag: 16.02.2010
(51) Int. Cl.: F16D 48/06

(54) **Kupplungsansteuerungsverfahren**
Clutch control method
Procédé de commande de couplage

(30) Priorität: 23.02.2009 DE 102009010002
(43) Veröffentlichungstag der Anmeldung: 25.08.2010
(73) Patentinhaber: GETRAG Getriebe- und Zahnradfabrik Hermann Hagenmeyer GmbH & Cie KG, 74199 Untergruppenbach (DE)
(72) Erfinder: Kalisch, Tobias, 78050 Villingen-Schwenningen (DE); Ottinger, Oliver, 78112 St. Georgen (DE); Nägele, Volker, 78141 Schönwald (DE)
(74) Vertreter: Witte, Weller & Partner

(56) Entgegenhaltungen:
- EP-A2- 1 939 481
- DE-A1- 4 433 825
- DE-A1- 19 953 292
- DE-A1-102005 030 185

## Beschreibung

Die vorliegende Erfindung betrifft ein Verfahren zur Ansteuerung einer automatisiert betätigbaren Kupplung eines Kraftfahrzeug-Antriebsstranges nach einem Rücksetzen einer Kupplungssteuereinrichtung, mittels der die Kupplung angesteuert wird, wobei der Kupplung wenigstens eine ein- und auslegbare Gangstufe eines Stufenwechselgetriebes zugeordnet ist und wobei ein Inkrementalsensor die Kupplungsposition erfasst.

Die Position der Kupplung wird mittels des Inkrementalsensors erfasst, um auf dieser Grundlage die Position der Kupplung genau regeln zu können. Inkrementalsensoren haben jedoch den Nachteil, dass sie nur relativ arbeiten. Dies bedeutet, dass nach einem Rücksetzen einer Kupplungssteuereinrichtung (Reset) der Inkrementalsensor neu eingelernt bzw. referenziert werden muss. Dies benötigt eine nicht unerhebliche Zeit. Für den Fall, dass die Kupplung und die zugeordnete Gangstufe ein Drehmoment übertragen und das Fahrzeug folglich in Bewegung ist, ist es für diesen Referenzierungsvorgang häufig auch notwendig, die Gangstufe auszulegen. Während dieser Zeit kann über den Antriebsstrang kein Drehmoment übertragen werden (Zugkraftunterbrechung), was sich für den Fahrer ungünstig bemerkbar macht.

Die automatisiert betätigbare Kupplung ist dabei in der Regel selbstöffnend ausgebildet, so dass im Falle eines Rücksetzens der Kupplungssteuereinrichtung die Kupplung in Öffnungsrichtung bewegt wird. Da die Kupplungssteuereinrichtung während des Rücksetzens die Signale des Inkrementalsensors nicht verarbeiten kann, "verliert" der Inkrementalsensor die absolute Kupplungsposition. Aufgrund der Tatsache, dass die Kupplung selbstöffnend ist, kann die aktuelle Position auch nicht einfach vor dem Rücksetzen erfasst und in einem rücksetzfesten Speicher (z.B. einem nicht initialisierten RAM-Speicher) über die Rücksetzzeitspanne hinweg gehalten werden.

Bei der demzufolge notwendigen Referenzierung des Inkrementalsensors muss generell sowohl eine Referenzierung in Bezug auf die Offenposition der Kupplung stattfinden. Zur Sicherheit erfolgt generell auch eine Referenzierung in der Schließposition (oder umgekehrt). Der zweite Referenzierungsvorgang stellt sicher, dass der zum Betätigen der Kupplung verwendete Aktuator über seinen vollen Verfahrweg betätigt werden kann und nicht irgendwo eine Schwergängigkeit oder dergleichen aufweist. Die zweite Referenzierung wird folglich auch als Verifizierung bezeichnet.

Wenn der Antriebsmotor des Antriebsstranges läuft und/oder sich das Fahrzeug in Bewegung befindet, muss die Referenzierung in Richtung der Schließposition bei ausgelegtem Gang stattfinden (bei einem Doppelkupplungsgetriebe muss auf dem zugeordneten Teilgetriebe der Gang ausgelegt sein). Die notwendigen Schritte zur Referenzierung und Verifizierung sind folglich generell folgende. In einem ersten Schritt wird die Kupplung geöffnet und nach "offen" referenziert. Anschließend wird die zugeordnete Gangstufe ausgelegt. Danach wird die Kupplung in Richtung der Schließposition referenziert. Anschließend wird die Kupplung wieder geöffnet, und die Gangstufe wird wieder eingelegt. Erst hiernach ist die Kupplung wieder fahrbereit und muss nun wieder geschlossen werden, um über den Antriebsstrang wieder ein Drehmoment übertragen zu können.

Diese bekannte Lösung zur Referenzierung und Verifizierung dauert relativ lange (unter Umständen mehrere Sekunden), so dass für einen nicht akzeptablen Zeitraum lang kein Drehmoment vom Antriebsmotor auf die Straße übertragen werden kann.

Aus dem Dokument DE 10 2005 030 185 A1 ist ein Verfahren zum Referenzieren eines Inkrementalwegsensors in einer elektronisch gesteuerten Betätigungsvorrichtung einer Kupplung bekannt, wobei die Betätigungsvorrichtung einen Speicher für eine Kennlinie aufweist, die das Kupplungsmoment abhängig von der Stellung eines Betätigungselementes angibt, wobei zunächst bestimmt wird, ob die Kupplung überschwellig schlupft. Falls ja, wird das aktuelle Kupplungsmoment bestimmt und aus dem aktuellen Kupplungsmoment und der Kennlinie die aktuelle Stellung des Betätigungselementes bestimmt.

Ferner wird in diesem Dokument vorgeschlagen, ein Referenzierungsverfahren durchzuführen, bei dem zunächst bestimmt wird, ob die Kupplung überschwellig schlupft, und falls nein, wird weiterhin bestimmt, ob ein Gang eingelegt ist. Falls ein Gang eingelegt ist, wird die Kupplung voll geschlossen, bis die Betätigungsvorrichtung einen Schließ-Referenzanschlag erreicht Dieses Verfahren soll auch bei fahrendem Fahrzeug durchführbar sein, wenn die Kupplung nur gering schlupft.

Es ist demzufolge eine Aufgabe der Erfindung, ein verbessertes Verfahren zur Ansteuerung einer automatisiert betätigbaren Kupplung nach einem Rücksetzen einer Kupplungssteuereinrichtung anzugeben, mit dem der Zeitraum einer solchen Zugkraftunterbrechung verringert werden kann.

Die obige Aufgabe wird gemäß einem ersten Aspekt der Erfindung bei dem eingangs genannten Verfahren dadurch gelöst, dass die Kupplung, die der eingelegten Gangstufe zugeordnet ist, bis in eine Schließ-Referenzposition geschlossen wird, um den Inkrementalsensor auf die absolute Kupplungsposition zu referenzieren, wobei währenddessen zumindest abschnittsweise ein Drehmoment über die Kupplung und die zugeordnete Gangstufe übertragen wird, wobei nach dem Referenzieren des Inkrementalsensors ein Verifizieren der Referenzierung des Inkrementalgebers durch Öffnen der Kupplung in eine Offen-Referenzposition erfolgt.

Gemäß einem zweiten Aspekt der Erfindung wird die obige Aufgabe bei dem eingangs genannten Verfahren dadurch gelöst, dass die Kupplung nach einem Rücksetzen zunächst bis in eine Offen-Referenzposition geöffnet wird, um den Inkrementalsensor auf die absolute Kupplungsposition zu referenzieren, wobei anschließend eine der Kupplung zugeordnete Gangstufe eingelegt wird, falls noch keine der Kupplung zugeordnete Gangstufe eingelegt ist, und wobei anschließend die Kupplung bis in eine Schließ-Referenzposition geschlossen wird, um die Referenzierung zu verifizieren, wobei währenddessen zumindest abschnittsweise ein Drehmoment über die Kupplung und die zugeordnete Gangstufe übertragen wird.

Durch die erfindungsgemäßen Verfahren kann nach einem Rücksetzen der Kupplungssteuereinrichtung die Zeit verkürzt werden, in der kein Drehmoment über den Antriebsstrang übertragen werden kann.

Mit dem erfindungsgemäßen Verfahren wird die Kupplung nach einem Rücksetzen bei eingelegter Gangstufe geschlossen, ohne dass die Referenzierung bereits verifiziert ist. Hierdurch kann die Dauer der Zugkraftunterbrechung deutlich verkürzt werden.

Insgesamt kann die Kupplung mit anderen Worten schneller verfügbar gemacht werden.

Erfindungsgemäß erfolgt nach dem Referenzieren des Inkrementalsensors ein Verifizieren der Referenzierung des Inkrementalgebers durch Öffnen der Kupplung in eine Offen-Referenzposition. Das Verifizieren der Referenzierung kann dabei auch erst dann erfolgen, wenn der nächste Schaltwunsch auftritt, oder in einer Fahrsituation, die ohnehin ein Öffnen der Kupplung erfordert.

Bei dem ersten Aspekt der Erfindung ist es von besonderem Vorzug, wenn das Schlie-βen der Kupplung langsamer erfolgt als das Schließen der Kupplung in einem Normalbetrieb. Insbesondere kann das Schließen der Kupplung hierbei auch langsamer erfolgen als das Schließen der Kupplung in einem normalen Referenzierbetrieb nach einem Rücksetzen der Kupplungssteuereinrichtung. Hierdurch wird die Zugkraft nach dem Rücksetzen langsam wieder aufgebaut, und ein Rucken beim Schließen der Kupplung wird vermieden.

Insgesamt ist es hierbei ferner vorteilhaft, wenn die Kupplung eine erste Kupplung eines Doppelkupplungsgetriebes ist, wobei die zweite Kupplung nach dem Rücksetzen bis in eine Offen-Referenzposition geöffnet wird, um den zugeordneten Inkrementalsensor auf die absolute Kupplungsposition zu referenzieren.

Die zweite Kupplung ist dabei in der Regel jene Kupplung, die vor dem Rücksetzen ohnehin geöffnet war, so dass die Referenzierung schnell erfolgen kann.

Nach dem Referenzieren auch der ersten Kupplung sind beide Kupplungen generell erneut zur Drehmomentübertragung zugelassen, wobei die Referenzierung noch nicht verifiziert ist.

Daher ist es von besonderem Vorzug, wenn die erste Kupplung nach dem Schließen in die Schließ-Referenzposition in eine Offen-Referenzposition geöffnet wird, um die Referenzierung des der ersten Kupplung zugeordneten Inkrementalsensors zu verifizieren.

Das Öffnen in die Offen-Referenzposition kann dabei hinausgezögert werden, da ja während dieses Zeitraumes Drehmoment über die erste Kupplung übertragen werden kann.

Ferner ist es vorteilhaft, wenn die zweite Kupplung nach dem Öffnen in die Offen-Referenzposition in eine Schließ-Referenzposition geschlossen wird, um die Referenzierung des der zweiten Kupplung zugeordneten Inkrementalsensors zu verifizieren.

Dies kann beispielsweise erfolgen, während über die erste Kupplung ein Drehmoment übertragen wird.

Dabei ist es von besonderem Vorzug, wenn die zweite Kupplung nach dem Schließen in die Schließ-Referenzposition erneut geöffnet wird.

Ab diesem Zeitpunkt kann auch erneut eine der zweiten Kupplung zugeordnete Gangstufe eingelegt werden.

Dabei ist es von besonderem Vorteil, wenn das erneute Öffnen der zweiten Kupplung erfolgt, bevor die erste Kupplung in die Offen-Referenzposition geöffnet wird.

Hierdurch kann über einen vergleichsweise langen Zeitraum Drehmoment über die erste Kupplung übertragen werden.

Ferner ist es hierbei vorteilhaft, wenn nach dem erneuten Öffnen der zweiten Kupplung eine dieser Kupplung zugeordnete Gangstufe eingelegt und die zweite Kupplung anschließend geschlossen wird, um ein Drehmoment über die zweite Kupplung und die zugeordnete Gangstufe zu übertragen.

Dabei versteht sich, dass dies erfolgen kann, während die erste Kupplung in die Offen-Referenzposition gefahren wird.

Da das Schließen der zweiten Kupplung erfolgt, bevor die Referenzierung der ersten Kupplung verifiziert ist, kann gegebenenfalls noch keine überschneidende Kupplungsbetätigung erfolgen (aus Sicherheitsgründen). Daher ist es möglich, dass in diesem Zeitabschnitt nochmals eine kurze Zugkraftunterbrechung erfolgt, indem nämlich zunächst die Drehmomentübertragung über die erste Kupplung beendet wird, bevor die zweite Kupplung geschlossen wird.

Hierbei entstehen folglich zwei Zugkraftunterbrechungen während der Referenzierung und Verifizierung der Inkrementalsensoren der Kupplungen, die Zugkraftunterbrechung ist jedoch insgesamt kürzer als im Stand der Technik.

Bei dem zweiten Aspekt der Erfindung ist es von besonderem Vorteil, wenn die Kupplung eine erste Kupplung eines Doppelkupplungsgetriebes ist, wobei die zweite Kupplung nach dem Rücksetzen bis in eine Offen-Referenzposition geöffnet wird, um den zugeordneten Inkrementalsensor auf die absolute Kupplungsposition zu referenzieren.

Hierdurch wird die zweite Kupplung, die bevorzugt jene Kupplung ist, über die vor dem Rücksetzen eine Drehmomentübertragung stattgefunden hat, schnellstmöglich ebenfalls referenziert. Dabei ist es von besonderem Vorzug, wenn die zweite Kupplung nach dem Referenzieren des zugeordneten Inkrementalsensors in eine Schließ-Referenzposition geschlossen wird, um die Referenzierung zu verifizieren.

Demzufolge kann die Verifizierung der zweiten Kupplung schnellstmöglich erfolgen.

Dabei ist es von besonderem Vorteil, wenn vor dem Schließen der zweiten Kupplung in die Schließ-Referenzposition eine der zweiten Kupplung zugeordnete Gangstufe ausgelegt wird.

Hierdurch kann das Verifizieren der Referenzierung des Inkrementalsensors der zweiten Kupplung erfolgen, während über die erste Kupplung ein Drehmoment übertragen wird.

Gemäß einer alternativen Ausführungsform werden nach dem Rücksetzen beide Kupplungen bis in eine jeweilige Offen-Referenzposition geöffnet, um den jeweiligen Inkrementalsensor auf die jeweilige absolute Kupplungsposition zu referenzieren, wobei anschließend jene der zwei Kupplungen in ihre Schließ-Referenzposition geschlossen wird, um die Referenzierung zu verifizieren und ein Drehmoment über jene Kupplung zu übertragen, über die vor dem Rücksetzen ein Drehmoment übertragen wurde.

Hierdurch ist zwar die Zeit der Zugkraftunterbrechung etwas länger, da es etwas länger dauert, die zuvor geschlossene Kupplung in die Offen-Referenzposition zu verfahren. Der Vorteil ist hierbei jedoch, dass der Fahrer aufgrund des Einlegens der gleichen Gangstufe das vor dem Rücksetzen vorhandene Beschleunigungsverhalten unmittelbar wieder zur Verfügung gestellt bekommt.

Insgesamt ist es bei beiden Aspekten der Erfindung von Vorteil, wenn die jeweils eingelegte und Drehmoment übertragende Gangstufe fortgesetzt in einem rücksetzfesten Speicher abgespeichert wird und wenn die so abgespeicherte Gangstufe nach einem Rücksetzen ausgelesen wird.

Hierdurch ist es möglich, je nach Fahrsituation wieder einen Betrieb durch die Referenzierungsverfahren einzurichten, der weitgehend dem Betrieb vor dem Rücksetzen entspricht. Beispielsweise ist es auch möglich, je nach eingelegter Gangstufe ein unterschiedliches Referenzierverfahren durchzuführen, um dem Fahrer einen optimalen Fahrbetrieb zu gewährleisten.

Ferner ist es insgesamt bevorzugt, wenn die jeweilige Referenzposition durch einen mechanischen Anschlag der jeweiligen Kupplung eingerichtet ist.

Mit anderen Worten wird die jeweilige Kupplung zum Referenzieren jeweils gegen den mechanischen Anschlag der jeweiligen Kupplung verfahren, um die Referenzierung durchzuführen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahr- zeug, in dem ein erfindungsgemäßes Verfahren angewendet werden kann;
- Fig. 2: ein Zeitablaufdiagramm des Kupplungsweges der ersten Kupplung und der zweiten Kupplung eines Doppelkupplungsgetriebes sowie des Signals eines zugeordneten Inkrementalsensors, und zwar während eines Referenzie- rungsvorganges nach einem Rücksetzen;
- Fig. 3: ein der Fig. 2 zugeordnetes Zeitablaufdiagramm, in dem schematisch das Ein- und Auslegen von Gangstufen gezeigt ist, die den zwei Kupplungen zugeordnet sind;
- Fig. 4: ein zu der Fig. 2 alternatives schematisches Ablaufdiagramm des Kupp- lungsweges von zwei Kupplungen eines Doppelkupplungsgetriebes über der Zeit, und zwar nach einem Rücksetzen einer Kupplungssteuereinrich- tung;
- Fig. 5: ein der Fig. 4 zugeordnetes Zeitablaufdiagramm, in dem schematisch das Ein- und Auslegen von Gangstufen gezeigt ist, die den zwei Kupplungen zugeordnet sind; und
- Fig. 6: ein schematisches Zeitablaufdiagramm, das der Fig. 4 zugeordnet ist und eine alternative Ausführungsform eines Referenzierungsvorgangs nach ei- nem Rücksetzen der Kupplungssteuereinrichtung des Doppelkupplungs- getriebes zeigt.

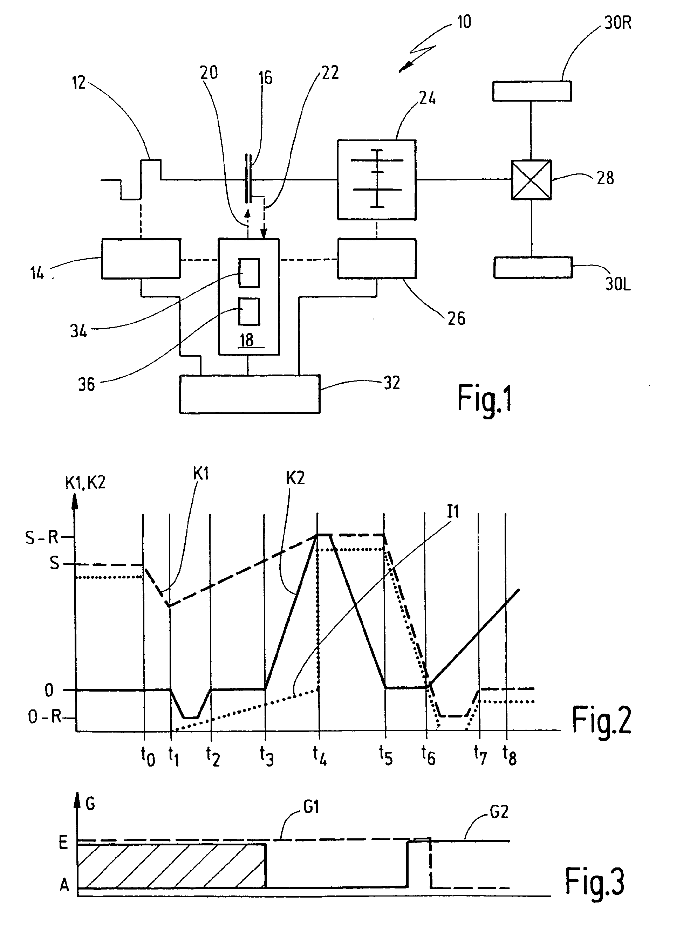

In Fig. 1 ist ein Antriebsstrang für ein Kraftfahrzeug generell mit 10 bezeichnet. Der Antriebsstrang 10 weist einen Antriebsmotor 12 wie einen Verbrennungsmotor auf, der mittels einer Motorsteuereinrichtung 14 gesteuert wird. Ferner beinhaltet der Antriebsstrang 10 eine Kupplungsanordnung 16. Die Kupplungsanordnung 16 kann eine einzelne Kupplung beinhalten, wie beispielsweise bei einem automatischen Schaltgetriebe (ASG, AMT), oder auch zwei Kupplungen im Falle eines Doppelkupplungsgetriebes. Die Kupplungsanordnung 16 wird von einer Kupplungssteuereinrichtung 18 angesteuert, und zwar über einen auf die Kupplungsanordnung 16 wirkenden Kupplungsaktuator 20 und einen Inkrementalsensor 22, der einen Parameter der Kupplungsanordnung 16 erfasst, wie beispielsweise den Weg der Kupplung. Im Falle von zwei Kupplungen bei einem Doppelkupplungsgetriebe versteht sich, dass in der Regel auch zwei Kupplungsaktuatoren 20 und zwei Inkrementalsensoren 22 vorgesehen sind.

Ferner beinhaltet der Antriebsstrang 10 ein Stufengetriebe 24, das beispielsweise als Vorgelegegetriebe ausgeführt sein kann. Dabei kann es sich auch beispielsweise um ein Vorgelegegetriebe bestehend aus zwei Teilgetrieben handeln, wie es bei Doppelkupplungsgetrieben üblich ist.

Das Stufengetriebe 24 wird von einer Getriebesteuereinrichtung 26 angesteuert. Ein Ausgang des Stufengetriebes 24 ist mit einem Differential 28 verbunden, das die Antriebskraft auf zwei angetriebene Räder 30L, 30R verteilt.

Der Antriebsstrang 10 weist ferner in der Regel eine übergeordnete Steuereinrichtung 32 auf, die mit der Motorsteuereinrichtung 14, der Kupplungssteuereinrichtung 18 und der Getriebesteuereinrichtung 26 verbunden ist. Alternativ kann auch eine dieser drei Steuereinrichtungen die Funktion einer übergeordneten Steuerung übernehmen. In Fig. 1 ist gestrichelt dargestellt, dass diese Steuereinrichtungen auch untereinander verbunden sein können.

Die Kupplungssteuereinrichtung 18 beinhaltet ein Normalfunktions-Modul 34, mittels dessen die Kupplungsanordnung 16 im Normalbetrieb angesteuert wird.

Wenn beispielsweise von der übergeordneten Steuerung 32 ein Schaltwunsch erteilt wird, wird bei einem Doppelkupplungsgetriebe beispielsweise die eine Kupplung geschlossen und die andere Kupplung geöffnet, und zwar in überschneidender Art und Weise, um einen Gangwechsel ohne Zugkraftunterbrechung durchführen zu können. Hierbei ist eine relativ hohe Genauigkeit der Ansteuerung der Kupplungsanordnung 16 notwendig, um Getriebeblockaden oder Ähnliches zu vermeiden.

Die Kupplungssteuereinrichtung 18 beinhaltet ferner ein Rücksetzfunktions-Modul, das aktiv wird, wenn aufgrund eines Fehlerzustandes die Kupplungssteuereinrichtung 18 zurückgesetzt ("Reset") wird.

Im Falle eines Fehlerzustandes kann von dem Kupplungsaktuator 20 keine Schließkraft mehr auf die Kupplungsanordnung 16 übertragen werden. Die Kupplungsanordnung 16 ist selbstöffnend ausgebildet, so dass sich die Kupplung bei fehlender Ansteuerung durch den Kupplungsaktuator 20 selbsttätig öffnet. Im Falle eines Rücksetzens öffnet sich die Kupplung folglich selbsttätig, und zum Anderen kann während des Rücksetzens das Signal von dem Inkrementalsensor 22 nicht verarbeitet werden.

Der Inkrementalsensor 22 ist ein relativ arbeitender Sensor, der nicht den Absolutwert einer Kupplungsposition an die Kupplungssteuereinrichtung 18 liefert sondern nur eine relative Änderung des Weges. Bei einem Rücksetzen "verliert" der Inkrementalsensor 22 folglich seine Kupplungsposition und muss daher nach dem Rücksetzen neu auf die absolute Kupplungsposition referenziert werden.

Die Fig. 2 und 3 zeigen ein erstes derartiges Referenzierungsverfahren gemäß dem ersten Aspekt der Erfindung. Der Ablauf ist folgender.

Vor einem Zeitpunkt t₀ ist eine erste Kupplung K1 eines Doppelkupplungsgetriebes geschlossen (Schließposition S), und die zweite Kupplung K2 ist geöffnet (Offenposition O). Ferner ist eine der ersten Kupplung K1 zugeordnete Gangstufe G1 eingelegt. Eine der zweiten Kupplung K2 zugeordnete Gangstufe G2 kann eingelegt sein oder auch nicht, was durch die Schraffur angedeutet ist.

In diesem Zusammenhang versteht sich, dass ein Doppelkupplungsgetriebe in der Regel zwei Teilgetriebe aufweist, die jeweils mehrere Gangstufen beinhalten. Im Folgenden wird jeweils nur auf eine Gangstufe Bezug genommen, die einer jeweiligen Kupplung zugeordnet ist. Es versteht sich dabei, dass die eine Gangstufe eine beliebige Gangstufe des jeweiligen Teilgetriebes bzw. Getriebes sein kann.

In Fig. 2 ist ferner das Positionssignal I1 des Inkrementalsensors 22 gezeigt, der der ersten Kupplung K1 zugeordnet ist. Aus Gründen einer übersichtlicheren Darstellung ist das Signal I1 dabei etwas versetzt zu der tatsächlichen Kupplungsposition K1 dargestellt.

Zu dem Zeitpunkt t₀ tritt, beispielsweise aufgrund eines Fehlerzustandes oder Ähnlichem, ein Rücksetzen ("Reset") der Kupplungssteuereinrichtung 18 auf. Hierdurch erhält der zugeordnete Kupplungsaktuator 20 kein Signal mehr und übt keine Schließkraft mehr auf die erste Kupplung K1 aus. Die erste Kupplung K1 beginnt folglich, sich zu öffnen, und zwar aufgrund der selbstöffnenden Eigenschaft (beispielsweise mittels einer Feder oder dergleichen), bis hin zu einem Zeitpunkt t₁. Durch das Bewegen der Kupplung K1 in Öffnungsrichtung findet eine Zugkraftunterbrechung statt, da auch über die zweite Kupplung K2 kein Drehmoment übertragen werden kann.

Die zweite Kupplung K2 bleibt in ihrem geöffneten Zustand. Ferner "verliert" die Kupplungssteuereinrichtung 18 das Signal des Inkrementalsensors 22. Das Rücksetzen ist zu einem Zeitpunkt t₁ abgeschlossen.

Anstelle beide Kupplungen K1, K2 im Rahmen des Referenzierungsverfahrens zunächst aktiv in Richtung des geöffneten Zustandes zu verfahren, wird die erste Kupplung K1 ab dem Zeitpunkt t₁ in Schließrichtung bewegt, und zwar relativ langsam. Dabei wird die Kupplung K1 über den "Kisspunkt" hinaus derart geschlossen, dass über die erste Kupplung K1 eine Drehmomentübertragung stattfinden kann. Ab diesem Zeitpunkt (der nach t₁ und vor t₃ liegt) ist die Zugkraftunterbrechung aufgrund des Rücksetzens folglich beendet.

Die erste Kupplung K1 wird dabei über die Schließposition S hinaus weiterbewegt, und zwar bis hin zu einer Schließ-Referenzposition S-R, bei der es sich in der Regel um einen Anschlag in Schließrichtung der Kupplung K1 handelt. Die Schließ-Referenzposition S-R wird zum Zeitpunkt t₄ erreicht. Bis zu diesem Zeitpunkt läuft das Signal I1 des Inkrementalsensors 22 parallel zu dem Kupplungsweg K1, liefert jedoch nicht die absolute Kupplungsposition K1.

In der Zwischenzeit wird nach dem Rücksetzen (zum Zeitpunkt t₁) die zweite Kupplung K2 in Richtung einer Offen-Referenzposition O-R bewegt, bei der es sich wiederum um eine Anschlagposition in Offenstellung handelt. Die zweite Kupplung K2 wird in der Offen-Referenzposition O-R für einen relativ kurzen Zeitpunkt gehalten, der hinreichend ist, um den Inkrementalsensor 22 der zweiten Kupplung K2 auf die absolute Kupplungsposition K2 zu referenzieren (das Signal des zweiten Inkrementalsensors ist in Fig. 2 aus Gründen einer übersichtlicheren Darstellung nicht gezeigt).

Nach diesem Referenzieren wird die zweite Kupplung K2 wieder in die Offenposition O bewegt, die zum Zeitpunkt t₂ erreicht ist. Anschließend bleibt die Kupplung K2 bis zum Zeitpunkt t₃ geöffnet. Zu diesem Zeitpunkt oder vorher wird die der zweiten Kupplung K2 zugeordnete Gangstufe G2 ausgelegt, so dass über das zugeordnete Teilgetriebe kein Drehmoment übertragen werden kann. Ab dem Zeitpunkt t₃ wird die zweite Kupplung K2 geschlossen, und zwar hin bis zu einer Schließ-Referenzposition S-R. Zwar ist der zugeordnete Inkrementalsensor 22 während dieser Zeit bereits auf die absolute Kupplungsposition referenziert. Durch das Anfahren der entgegengesetzten Referenzposition wird der gesamte Kupplungsweg der zweiten Kupplung K2 durchfahren. In der Schließ-Referenzposition findet eine weitere Referenzierung statt, die sicherstellt, dass der zugeordnete Kupplungsaktuator 20 über seinen ganzen Verfahrweg betätigt werden kann und nicht irgendwo eine Schwergängigkeit aufweist. Ferner kann durch diese zweite Referenzierung die Richtigkeit des in der ersten Referenzierung ermittelten Positionswertes bestätigt werden. Die zweite Referenzierung wird folglich vorliegend auch als Verifizierung bezeichnet.

Nach dem Zeitpunkt t₄ verbleibt die zweite Kupplung K2 für diese zweite Referenzierung kurz auf der Schließ-Referenzposition und wird dann wieder geöffnet, und zwar in die Offenposition O, die zum Zeitpunkt t₅ erreicht wird. Ab diesem Zeitpunkt kann in dem zweiten Teilgetriebe wieder eine Gangstufe G2 eingelegt werden, was in Fig. 3 gezeigt ist.

Die erste Kupplung K1 wird ab dem Zeitpunkt t₄ (oder einem etwas versetzten Zeitpunkt hierzu) referenziert, so dass der Inkrementalsensor 22 wieder ein absolutes Kupplungssignal liefert. Diese Referenzierung ist jedoch noch nicht verifiziert, so dass es notwendig ist, auch die erste Kupplung K1 noch einmal in die Offen-Referenzposition O-R zu bewegen.

Dies wird jedoch möglichst lange hinausgezögert, und zwar derart, dass möglichst lange eine Zugkraft über die erste Kupplung K1 und die zugeordnete Gangstufe G1 übertragen werden kann, jedenfalls so lange, bis der Inkrementalsensor, der der zweiten Kupplung K2 zugeordnet ist, nicht nur auf die absolute Kupplungsposition referenziert ist sondern auch verifiziert ist (im Wesentlichen ab dem Zeitpunkt t₅).

Ab diesem Zeitpunkt wird die erste Kupplung K1 wieder geöffnet und in Richtung der Offen-Referenzposition O-R verfahren. Sobald die erste Kupplung K1 mit Sicherheit geöffnet ist (zum Zeitpunkt t₆), kann die zweite Kupplung K2 geschlossen werden, so dass etwa zu einem Zeitpunkt t₈ wieder eine Zugkraft auf die angetriebenen Räder 30L, 30R übertragen werden kann. Unterdessen wird die erste Kupplung K1 zwischen t₆ und t₇ in die Offen-Referenzposition O-R verfahren, um die Referenzierung des Inkrementalsensors 22 der ersten Kupplung K1 zu verifizieren. Anschließend wird die erste Kupplung K1 wieder in die Offenposition O verfahren (zum Zeitpunkt t₇). Ab diesem Zeitpunkt sind beide Kupplungen K1, K2 wieder voll einsatzfähig. Die Inkrementalsensoren beider Kupplungen sind nicht nur referenziert sondern auch verifiziert. Demzufolge können auch Überschneidungsschaltungen, bei denen es auf eine hohe Sicherheit bei der Positionserfassung ankommt, durchgeführt werden. In Fig. 3 ist gezeigt, dass die der ersten Kupplung K1 zugeordnete Gangstufe G1 zum Zeitpunkt t₆ ausgelegt wird. Dies muss jedoch nicht sein. Die erste Gangstufe G1 kann auch eingelegt bleiben, da die erste Kupplung K1 geöffnet ist.

Bei dem oben beschriebenen Verfahren zum Referenzieren von zwei Kupplungen eines Doppelkupplungsgetriebes kann die Zeitdauer der Zugkraftunterbrechung während des Referenzierens deutlich verringert werden. Vorliegend entstehen zwar zwei, jedoch sehr kurze, Zugkraftunterbrechungen, ca. von t₀ bis t₃ und von t₅ bis t₈.

Das Öffnen der ersten Kupplung K1 kann, wie gesagt, hinausgezögert werden, und zwar nach Bedarf. Dies kann beispielsweise erst mit dem nächsten Schaltwunsch oder in einer Fahrsituation erfolgen, die ein Öffnen der Kupplung K1 erfordert. Erst dann wird diese Kupplung geöffnet und nach "offen" referenziert.

Das in Bezug auf die Kupplung K1 beschriebene Verfahren zur Referenzierung kann auch bei einem Antriebsstrang verwendet werden, der nur eine einzelne Kupplung aufweist, z.B. ein ASG, AMT oder Ähnliches.

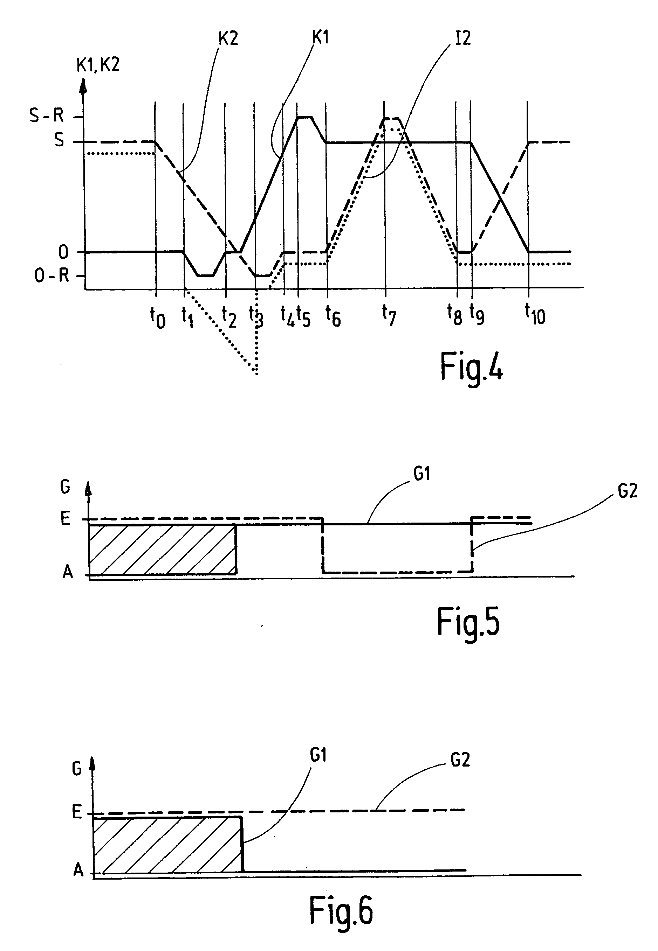

In den Fig. 4 bis 6 sind weitere Ausführungsform von Referenzierverfahren der Kupplungssteuereinrichtung 18 gezeigt, und zwar gemäß dem zweiten Aspekt der Erfindung.

Bei dem zweiten Referenzierungsverfahren befindet sich die erste Kupplung K1 bis zum Zeitpunkt t₀ in der Offenposition O, und die zweite Kupplung K2 in der Schließposition S. Die zweite Kupplung K2 überträgt ein Drehmoment, wobei die zugeordnete Gangstufe G2 eingelegt ist. Die der ersten Kupplung K1 zugeordnete Gangstufe G1 kann eingelegt sein oder auch nicht, wie es durch eine Schraffur angedeutet ist.

Zum Zeitpunkt t₀ findet wiederum ein Reset statt, der etwa bis t₁ dauert. Anschließend ist die Kupplung K2 geöffnet, und die Inkrementalsensoren sind nicht mehr auf die absoluten Kupplungspositionen referenziert. Ab dem Zeitpunkt t₁ wird die zuvor geöffnete Kupplung K1 referenziert, indem sie in die Offen-Referenzposition O-R verfahren wird. Die Referenzierung ist bei t₂ abgeschlossen. Im Gegensatz zu dem zuvor beschriebenen Verfahren wird auch die zweite Kupplung K2 in die zugeordnete Offen-Referenzposition O-R verfahren, die zum Zeitpunkt t₃ erreicht wird. Ab diesem Zeitpunkt kann der der zweiten Kupplung K2 zugeordnete Inkrementalsensor 22 referenziert werden, wie es durch das Sensorsignal I2 angedeutet ist. Ferner wird die erste Kupplung K1 nach dem Zeitpunkt t₂ in Richtung der Schließ-Referenzposition bewegt, die bei t₅ erreicht ist. Zuvor wurde die der ersten Kupplung K1 zugeordnete Gangstufe G1 eingelegt, sofern diese noch nicht eingelegt war. Demzufolge wird etwa ab dem Zeitpunkt t₄ über die erste Kupplung K1 und die zugeordnete Gangstufe G1 ein Drehmoment übertragen. Die erste Kupplung K1 wird dabei bis in die Schließ-Referenzposition S-R verfahren, um die Referenzierung, die in der Offen-Referenzposition stattgefunden hat, zu verifizieren. Anschließend wird die erste Kupplung K1 in die Schließposition S verfahren (Zeitpunkt t₆).

In der Zwischenzeit ist der Inkrementalsensor der zweiten Kupplung K2 auf die absolute Kupplungsposition referenziert worden (bis t₄). Anschließend wird die zugeordnete Gangstufe G2 ausgelegt, und die zweite Kupplung K2 wird in die Schließ-Referenzposition verfahren (Zeitpunkt t₇), um die zuvor erfolgte Referenzierung zu verifizieren. Anschließend wird die zweite Kupplung K2 wieder geöffnet (Zeitpunkt t₈), wonach die der zweiten Kupplung K2 zugeordnete Gangstufe G2 wieder eingelegt werden kann. Anschließend sind beide Kupplungen K1, K2 hinsichtlich ihrer Inkrementalsensoren 22 referenziert und verifiziert, so dass ab dem Zeitpunkt t₉ bereits eine Überschneidungsschaltung stattfinden kann, indem zwischen t₉ und t₁₀ die zweite Kupplung K2 in die Schließposition S und die erste Kupplung K1 in die Offenposition O bewegt wird. Dies kann ohne Zugkraftunterbrechung erfolgen.

Bei dem unter Bezugnahme auf die Fig. 4 und 5 beschriebenen Verfahren findet eine Zugkraftunterbrechung nur etwa von t₀ bis t₄ statt.

Ferner lässt sich das Verfahren in Bezug auf die Kupplung K2 auch auf einen Antriebsstrang mit nur einer Kupplung anwenden, wie ein ASG, AMT.

In Fig. 6 ist eine alternative Ausführungsform gezeigt, bei der nicht die zuerst in die Offen-Referenzposition O-R referenzierte Kupplung K1 zur Drehmomentübertragung geschlossen wird. Stattdessen wird die der ersten Kupplung K1 zugeordnete Gangstufe G1 ausgelegt, und die der zweiten Kupplung K2 zugeordnete Gangstufe G2 bleibt eingelegt, so dass eine Drehmomentübertragung wieder zu einem Zeitpunkt zwischen t₆ und t₇ stattfinden kann. Dabei ist von Vorteil, dass dem Fahrer Zugkraft über die gleiche Kupplung K2 und zugeordnete Gangstufe G2 zugeteilt werden kann, die auch vor dem Reset (d.h. vor t₀) für die Drehmomentübertragung verantwortlich waren. Demzufolge bekommt der Fahrer das vor dem Rücksetzen vorhandene Beschleunigungsverhalten unmittelbar wieder zur Verfügung gestellt. Hierdurch verlängert sich allerdings die Zeit der Zugkraftunterbrechung etwa von t₀ bis zu einem Zeitpunkt zwischen t₆ und 6₇, da die zweite Kupplung K2 einen längeren Verfahrweg in die Offen-Referenzposition O-R hat und folglich erst bei t₃ wieder referenziert ist.

## Patentansprüche

1. Verfahren zur Ansteuerung einer automatisiert betätigbaren Kupplung (K1) eines Kraftfahrzeug-Antriebsstranges (10) nach einem Rücksetzen einer Kupplungssteuereinrichtung (18), mittels der die Kupplung (K1) angesteuert wird, wobei der Kupplung (K1) wenigstens eine ein- und auslegbare Gangstufe (G1) eines Stufenwechselgetriebes (24) zugeordnet ist und wobei ein Inkrementalsensor (22) die Kupplungsposition erfasst, **gekennzeichnet durch** die Schritte:
Schließen der Kupplung (K1), die der eingelegten Gangstufe (G1) zugeordnet ist, bis in eine Schließ-Referenzposition (S-R), um den Inkrementalsensor (22) auf die absolute Kupplungsposition zu referenzieren, wobei währenddessen zumindest abschnittsweise ein Drehmoment über die Kupplung (K1) und die zugeordnete Gangstufe (G1) übertragen wird, wobei nach dem Referenzieren des Inkrementalsensors (22) ein Verifizieren der Referenzierung des Inkrementalgebers (22) **durch** Öffnen der Kupplung (K1) in eine Offen-Referenzposition (O-R) erfolgt.

2. Verfahren nach Anspruch 1, **dadurch gekennzeichnet, dass** das Schließen der Kupplung (K1) langsamer erfolgt als das Schließen der Kupplung (K1) in einem Normalbetrieb.

3. Verfahren nach einem der Ansprüche 1 bis 2, **dadurch gekennzeichnet, dass** die Kupplung eine erste Kupplung (K1) eines Doppelkupplungsgetriebes ist, wobei die zweite Kupplung (K2) nach dem Rücksetzen bis in eine Offen-Referenzposition (O-R) geöffnet wird, um den zugeordneten Inkrementalsensor (22) auf die absolute Kupplungsposition zu referenzieren.

4. Verfahren nach Anspruch 3, **dadurch gekennzeichnet, dass** die erste Kupplung (K1) nach dem Schließen in die Schließ-Referenzposition (S-R) in eine Offen-Referenzposition (O-R) geöffnet wird, um die Referenzierung des der ersten Kupplung (K1) zugeordneten Inkrementalsensors zu verifizieren.

5. Verfahren nach Anspruch 3 oder 4, **dadurch gekennzeichnet, dass** die zweite Kupplung (K2) nach dem Öffnen in die Offen-Referenzposition (O-R) in eine Schließ-Referenzposition (S-R) geschlossen wird, um die Referenzierung des der zweiten Kupplung (K2) zugeordneten Inkrementalsensors zu verifizieren.

6. Verfahren nach Anspruch 5, **dadurch gekennzeichnet, dass** die zweite Kupplung (K2) nach dem Schließen in die Schließ-Referenzposition (S-R) erneut geöffnet wird.

7. Verfahren nach Anspruch 6, **dadurch gekennzeichnet, dass** das erneute Öffnen der zweiten Kupplung (K2) erfolgt, bevor die erste Kupplung (K1) in die Offen-Referenzposition (O-R) geöffnet wird.

8. Verfahren nach Anspruch 7, **dadurch gekennzeichnet, dass** nach dem erneuten Öffnen der zweiten Kupplung (K2) eine dieser Kupplung zugeordnete Gangstufe (G2) eingelegt und die zweite Kupplung (K2) anschließend geschlossen wird, um ein Drehmoment über die zweite Kupplung (K2) und die zugeordnete Gangstufe (G2) zu übertragen.

9. Verfahren nach dem Oberbegriff des Anspruchs 1, **gekennzeichnet durch** die Schritte:
- Öffnen der Kupplung (K1) nach einem Rücksetzen bis in eine Offen-Referenzposition (O-R), um den Inkrementalsensor (22) auf die absolute Kupplungsposition zu referenzieren,
- Einlegen einer der Kupplung (K1) zugeordneten Gangstufe (G1), falls noch keine der Kupplung zugeordnete Gangstufe (G1) eingelegt ist, und
- Schließen der Kupplung (K1) bis in eine Schließ-Referenzposition (S-R), um die Referenzierung zu verifizieren, wobei währenddessen zumindest abschnittsweise ein Drehmoment über die Kupplung (K1) und die zugeordnete Gangstufe (G1) übertragen wird.

10. Verfahren nach Anspruch 9, **dadurch gekennzeichnet, dass** die Kupplung eine erste Kupplung (K1) eines Doppelkupplungsgetriebes ist, wobei die zweite Kupplung (K2) nach dem Rücksetzen bis in eine Offen-Referenzposition (O-R) geöffnet wird, um den zugeordneten Inkrementalsensor (22) auf die absolute Kupplungsposition zu referenzieren.

11. Verfahren nach Anspruch 10, **dadurch gekennzeichnet, dass** die zweite Kupplung (K2) nach dem Referenzieren des zugeordneten Inkrementalsensors (22) bis in eine Schließ-Referenzposition (S-R) geschlossen wird, um die Referenzierung zu verifizieren.

12. Verfahren nach Anspruch 10, **dadurch gekennzeichnet, dass** nach dem Rücksetzen beide Kupplungen (K1, K2) bis in eine jeweilige Offen-Referenzposition (O-R) geöffnet werden, um den jeweiligen Inkrementalsensor (22) auf die jeweilige absolute Kupplungsposition zu referenzieren, wobei anschließend jene (K2) der zwei Kupplungen (K1, K2) in ihre Schließ-Referenzposition (S-R) geschlossen wird, um die Referenzierung zu verifizieren und ein Drehmoment über jene Kupplung (K2) zu übertragen, über die vor dem Rücksetzen ein Drehmoment übertragen wurde.

13. Verfahren nach einem der Ansprüche 1 bis 12, mit den Schritten, die jeweils eingelegte und Drehmoment übertragende Gangstufe (G1; G2) fortgesetzt in einem rücksetzfesten Speicher abzuspeichern und die so abgespeicherte Gangstufe (G1; G2) nach einem Rücksetzen auszulesen.

14. Verfahren nach einem der Ansprüche 1 bis 13, **dadurch gekennzeichnet, dass** die jeweilige Referenzposition (S-R, O-R) durch einen mechanischen Anschlag der jeweiligen Kupplung (K1, K2) eingerichtet ist.

## Claims

1. Method for controlling a clutch (K1), which can be activated in an automatic fashion, of a motor vehicle drive train (10) after a clutch control device (18), by means of which the clutch (K1) is controlled, has been reset, wherein at least one gear step (G1), which can be engaged and disengaged, of a step-by-step variable-speed transmission (24) is assigned to the clutch (K1), and wherein an incremental sensor (22) senses the clutch position, **characterized by** the steps:
closing the clutch (K1) assigned to the engaged gear step (G1), as far as a closed reference position (S-R), in order to reference the incremental sensor (22) to the absolute clutch position, wherein during this process a torque is at least partially transmitted via the clutch (K1) and the assigned gear step (G1), wherein after the referencing of the incremental sensor (22) the referencing of the incremental sensor (22) is verified by opening the clutch (K1) into an open reference position (O-R).

2. Method according to Claim 1, **characterized in that** the closing of the clutch (K1) takes place more slowly than the closing of the clutch (K1) in a normal operating mode.

3. Method according to one of Claims 1 to 2, **characterized in that** the clutch is a first clutch (K1) of a double clutch transmission, wherein the second clutch (K2) is opened as far as an open reference position (O-R) after the resetting, in order to reference the assigned incremental sensor (22) to the absolute clutch position.

4. Method according to Claim 3, **characterized in that** after the closing into the closed reference position (S-R) the first clutch (K1) is opened into an open reference position (O-R) in order to verify the referencing of the incremental sensor assigned to the first clutch (K1).

5. Method according to Claim 3 or 4, **characterized in that** after the opening into the open reference position (O-R) the second clutch (K2) is closed into a closed reference position (S-R) in order to verify the referencing of the incremental sensor assigned to the second clutch (K2).

6. Method according to Claim 5, **characterized in that** after the closing into the closed reference position (S-R) the second clutch (K2) is opened again.

7. Method according to Claim 6, **characterized in that** the renewed opening of the second clutch (K2) takes place before the first clutch (K1) is opened into the open reference position (O-R).

8. Method according to Claim 7, **characterized in that** after renewed opening of the second clutch (K2), a gear step (G2) which is assigned to this clutch is engaged, and the second clutch (K2) is subsequently closed in order to transmit a torque via the second clutch (K2) and the assigned gear step (G2).

9. Method according to the preamble of Claim 1, **characterized by** the steps:
- opening of the clutch (K1) after resetting as far as an open reference position (O-R) in order to reference the incremental sensor (22) to the absolute clutch position,
- engagement of a gear step (G1) assigned to the clutch (K1), if a gear step (G1) assigned to the clutch has not yet been engaged, and
- closing the clutch (K1) as far as a closed reference position (S-R) in order to verify the referencing, wherein during this process a torque is at least partially transmitted via the clutch (K1) and the assigned gear step (G1).

10. Method according to Claim 9, **characterized in that** the clutch is a first clutch (K1) of a double clutch transmission, wherein after the resetting as far as an open reference position (O-R) the second clutch (K2) is opened in order to reference the assigned incremental sensor (22) to the absolute clutch position.

11. Method according to Claim 10, **characterized in that** after the referencing of the assigned incremental sensor (22) the second clutch (K2) is closed as far as a closed reference position (S-R) in order to verify the referencing.

12. Method according to Claim 10, **characterized in that** after the resetting both clutches (K1, K2) are opened as far as a respective open reference position (O-R) in order to reference the respective incremental sensor (22) to the respective absolute clutch position, wherein subsequently that clutch (K2) of the two clutches (K1, K2) via which a torque was transmitted before the resetting is closed into its closed reference position (S-R) in order to verify the referencing and to transmit a torque via that clutch (K2).

13. Method according to one of Claims 1 to 12, having the steps of storing the respectively engaged and torque-transmitting gear step (G1; G2) continuously in a reset-proof memory and reading out the gear step (G1; G2) stored in this way after resetting.

14. Method according to one of Claims 1 to 13, **characterized in that** the respective reference position (S-R, O-R) is configured by means of a mechanical stop of the respective clutch (K1, K2).

## Revendications

1. Procédé de commande d'un embrayage à commande automatisée (K1) d'une chaîne cinématique d'un véhicule automobile (10) après une réinitialisation d'un dispositif de commande d'embrayage (18), au moyen duquel l'embrayage (K1) est commandé, au moins un rapport de vitesse (G1) d'une boîte de vitesse à rapports étagés (24) pouvant être enclenché et désenclenché étant associé à l'embrayage (K1) et un capteur incrémental (22) détectant la position de l'embrayage, **caractérisé par** les étapes suivantes :
fermeture de l'embrayage (K1), qui est associé au rapport de vitesse enclenché (G1), jusque dans une position de référence de fermeture (S-R), afin de référencer le capteur incrémental (22) à la position d'embrayage absolue, au moins un couple étant pendant ce temps transmis en partie par le biais de l'embrayage (K1) et du rapport de vitesse associé (G1), une vérification du référencement du capteur incrémental (22) ayant lieu après le référencement du capteur incrémental (22) par ouverture de l'embrayage (K1) dans une position de référence d'ouverture (O-R).

2. Procédé selon la revendication 1, **caractérisé en ce que** la fermeture de l'embrayage (K1) a lieu plus lentement que la fermeture de l'embrayage (K1) dans un fonctionnement normal.

3. Procédé selon l'une quelconque des revendications 1 à 2, **caractérisé en ce que** l'embrayage est un premier embrayage (K1) d'une boîte de vitesses à double embrayage, le deuxième embrayage (K2) étant ouvert après la réinitialisation jusque dans une position de référence d'ouverture (O-R), afin de référencer le capteur incrémental associé (22) à la position d'embrayage absolue.

4. Procédé selon la revendication 3, **caractérisé en ce que** le premier embrayage (K1) est ouvert dans une position de référence d'ouverture (O-R) après la fermeture dans la position de référence de fermeture (S-R), afin de vérifier le référencement du capteur incrémental associé au premier embrayage (K1).

5. Procédé selon la revendication 3 ou 4, **caractérisé en ce que** le deuxième embrayage (K2) est fermé dans une position de référence de fermeture (S-R) après l'ouverture dans la position de référence d'ouverture (O-R), afin de vérifier le référencement du capteur incrémental associé au deuxième embrayage (K2).

6. Procédé selon la revendication 5, **caractérisé en ce que** le deuxième embrayage (K2) est à nouveau ouvert après la fermeture dans la position de référence de fermeture (S-R).

7. Procédé selon la revendication 6, **caractérisé en ce que** la réouverture du deuxième embrayage (K2) a lieu avant que le premier embrayage (K1) ne soit ouvert dans la position de référence d'ouverture (O-R).

8. Procédé selon la revendication 7, **caractérisé en ce qu'**après la réouverture du deuxième embrayage (K2), un rapport de vitesse (G2) associé à cet embrayage est enclenché et le deuxième embrayage (K2) est ensuite fermé, afin de transmettre un couple par le biais du deuxième embrayage (K2) et du rapport de vitesse associé (G2).

9. Procédé selon le préambule de la revendication 1, **caractérisé par** les étapes suivantes :
- ouverture de l'embrayage (K1) après une, réinitialisation jusque dans une position de référence d'ouverture (O-R), afin de référencer le capteur incrémental (22) à la position d'embrayage absolue,
- enclenchement d'un rapport de vitesse (G1) associé à l'embrayage (K1), au cas où aucun rapport de vitesse (G1) associé à l'embrayage n'est enclenché, et
- fermeture de l'embrayage (K1) jusque dans une position de référence de fermeture (S-R), afin de vérifier le référencement, au moins un couple étant pendant ce temps transmis en partie par le biais de l'embrayage (K1) et du rapport de vitesse associé (G1).

10. Procédé selon la revendication 9, **caractérisé en ce que** l'embrayage est un premier embrayage (K1) d'une boîte de vitesses à double embrayage, le deuxième embrayage (K2) étant ouvert après la réinitialisation jusque dans une position de référence d'ouverture (O-R), afin de référencer le capteur incrémental associé (22) à la position d'embrayage absolue.

11. Procédé selon la revendication 10, **caractérisé en ce que** le deuxième embrayage (K2) est fermé après le référencement du capteur incrémental associé (22) jusque dans une position de référence de fermeture (S-R), afin de vérifier le référencement.

12. Procédé selon la revendication 10, **caractérisé en ce qu'**après la réinitialisation, les deux embrayages (K1, K2) sont ouverts jusque dans une position de référence d'ouverture respective (O-R), afin de référencer le capteur incrémental respectif (22) à la position d'embrayage absolue respective, l'embrayage (K2) des deux embrayages (K1, K2) étant ensuite fermé dans sa position de référence de fermeture (S-R) afin de vérifier le référencement et de transmettre un couple par le biais dudit embrayage (K2), par le biais duquel embrayage un couple avait été transmis avant la réinitialisation.

13. Procédé selon l'une quelconque des revendications 1 à 12, comprenant les étapes de mémorisation en continu dans une mémoire non réinitialisable, du rapport de vitesse (G1 ; G2) enclenché et transmettant le couple, et de lecture du rapport de vitesse (G1 ; G2) ainsi mémorisé, après une réinitialisation.

14. Procédé selon l'une quelconque des revendications 1 à 13, **caractérisé en ce que** la position de référence respective (S-R, O-R) est ajustée par une butée mécanique de l'embrayage respectif (K1, K2).
